# EUROPEAN PATENT SPECIFICATION

(11) **EP 3 575 251 B1**
(45) Date of publication and mention of the grant of the patent: **26.06.2024**
(21) Application number: 18382369.9
(22) Date of filing: 29.05.2018
(51) Int. Cl.: B65G 49/06

(54) **APPARATUS AND METHOD FOR LOADING AND/OR UNLOADING A GLASS PLATE STORAGE DEVICE**
VORRICHTUNG UND VERFAHREN ZUM BELADEN UND/ODER ENTLADEN EINER GLASPLATTENAUFBEWAHRUNGSVORRICHTUNG
APPAREIL ET PROCÉDÉ DE CHARGEMENT ET/OU DE DÉCHARGEMENT D'UN DISPOSITIF DE STOCKAGE DE PLAQUES DE VERRE

(43) Date of publication of application: 04.12.2019
(73) Proprietor: Turomas SL, 44415 Rubielos de Mora Teruel (ES)
(72) Inventor: Tomás Martin, Miguel, 44415 Rubielos de Mora (ES)
(74) Representative: Nederlandsch Octrooibureau

(56) References cited:
- CN-A- 106 115 269
- US-A- 1 529 584
- US-A- 1 953 056

## Description

### FIELD OF THE INVENTION

The invention relates to a glass plate storage device and a device for loading and/or unloading a glass plate storage device. The invention further relates to a method for loading and/or unloading a glass plate storage device.

### BACKGROUND OF THE INVENTION

Automatic or intelligent storage systems are known for taking advantage of spaces of virtually any shape and size. In these systems, glass plate storage devices, also known as racks, are used for storing the glass plates in a vertical or horizontal position. In some of these systems, automatic loading devices are used to move the glass plate storage devices to the desired position in the storage. The glass plate storage devices may be arranged in one or several rows in the storage system. The automatic loading machine can be moved or placed next to the glass plate storage devices. The automatic loading device comprises a platform and a loading system for loading the glass plate storage device on top of the platform and moving it to, for instance, the feeding point of a glass processing machine. If the glass processing machine is equipped with, for instance, vacuum cups in the loading support, the loading and processing of the glass can be fully automated.

Automatic loading devices wherein the loading system comprises a hook are known. In these automatic loading devices, the loading system grabs the glass plate storage device with the hook. For achieving this, the glass plate storage device comprises an opening such that the hook can be inserted in this opening. Once the loading system has inserted the hook in the opening, the glass plate storage device can be pulled towards the automatic loading device and moved to the desired position by the loading system. However, these loading systems show several disadvantages and problems. First of all, the process of inserting the hook in the opening is rather complex and slow as the loading system needs to aim at the opening and successfully hook the glass plate storage device. Furthermore, once the glass plate storage device has been hooked, the process of loading it into the automatic loading device or unloading it from the automatic loading device is also complex as the glass plate storage device is suspending from the hook in an unstable position. Also the hook needs to be moved from one side to another of the automatic loading device depending on which side of the automatic loading device a glass plate storage device is located, for a loading process, or depending on which side of the automatic loading device a glass plate storage device needs to be unloaded which was previously loaded on the automatic loading device, for an unloading process.

CN 106 115 269 A discloses a glass anti-scratch lower chip placing method wherein a suction cup on a machine takes a glass sheet, the machine rotates so that the glass on the suction cup corresponds with the glass storage rack, an arm of the machine tilts the glass sheet to a certain angle, so that the glass sheet on the suction cup and the glass sheets on the glass storage rack are spaced apart in the horizontal direction, the suction cup frees then that the glass sheet such that it falls onto the glass storage rack. Tthe glass storage rack is moved by a moving device in the direction of the machine, and when the glass sheet is on the glass storage rack the moving device drives the glass storage rack back.

### SUMMARY OF THE INVENTION

It would be advantageous to have an improved system for loading and/or unloading a glass plate storage device. To better address this concern, a first aspect of the invention provides a device for loading and/or unloading a glass plate storage device, wherein the device comprises a loading system comprising a gear wheel with a series of depressions in the surface thereby defining a rim of teeth between pairs of depressions, wherein the gear wheel is configured to engage the glass plate storage device and to rotate in a first direction thereby moving the glass plate storage device towards the device for loading and/or unloading the glass plate storage device over the device and/or wherein the gear wheel is configured to rotate in a second direction thereby moving the glass plate storage device away from the device and to disengage the glass plate storage device for unloading the glass plate storage device from the device and wherein the first direction and the second direction are opposite directions. This device for loading and/or unloading a glass plate storage device may provide a more efficient use of time and/or power, as the device allows a precise, efficient and fast engagement and disengagement between the device and the glass plate storage device wherein the gear wheel allows to directly engage or disengage with the glass plate storage device right after the device has been placed next to the glass plate storage device, thereby avoiding extra steps. Also the gear wheel provides a very efficient way of loading and/or unloading the glass plate storage device over the device by turning the gear wheel. The gear wheel may comprise any number of suitable teeth and depressions. The device may comprise any suitable number of gear wheels for engaging the glass plate storage device. The gear wheels may be placed in the device in any suitable position.

The device further comprises a surface for supporting the glass plate storage device and the gear wheel is configured to rotate in the first direction until the glass plate storage device is loaded over the surface and/or to rotate in the second direction until the glass plate storage device is unloaded from the surface. This allows for efficiently loading and/or unloading the glass plate storage device because the glass plate storage device is in a stable position during the whole process.

The teeth of the gear wheel may be uniformly distributed. This is an efficient implementation of the gear wheel. However, the teeth may have any other suitable distribution over the surface of the gear wheel.

The loading system may further comprise moving means configured to move the gear wheel towards the glass plate storage device such that the gear wheel can engage the glass plate storage device, and/or to move the gear wheel away from the glass plate storage device such that the gear wheel can disengage the glass plate storage device. In this way, the engaging and/or disengaging between the gear wheel and the glass plate storage device may be done in a very efficient way.

Another aspect of the invention provides a glass plate storage device for storing a glass plate, wherein the glass plate storage device comprises a bar comprising a series of depressions thereby defining a series of teeth between pairs of depressions. This allows for efficiently loading and/or unloading the glass plate storage device because the bar provides for efficient engagement and/or disengagement of the glass plate storage device. The bar may comprise any number of suitable teeth and depressions. The glass plate storage device may comprise any suitable number of bars for engaging and or disengaging the device for loading and/or unloading a glass plate storage device. The bars may be placed in the glass plate storage device in any suitable position.

The depressions of the bar may be uniformly distributed. This is an efficient implementation of the bar. However, the depressions may have any other suitable distribution over the surface of the bar.

In another aspect of the invention, it is provided a system comprising a device for loading and/or unloading a glass plate storage device and a glass plate storage device as described above, wherein the gear wheel is configured to engage the bar of the glass plate storage device such that the series of depressions and teeth of the gear wheel are in operative engagement with the depressions and teeth of the bar and to rotate in the first direction causing movement of the bar relative to the gear wheel towards the device thereby also moving the glass plate storage device towards the device and/or wherein the gear wheel is configured to rotate in the second direction causing movement of the bar relative to the gear wheel away from the device thereby also moving the glass plate storage device away from the device and to disengage the bar of the glass plate storage device such that the series of depressions and teeth of the gear wheel are not in operative engagement with the depressions and teeth of the bar.

Another aspect of the invention provides a method of loading a glass plate storage device over a device for loading and/or unloading a glass plate storage device, wherein the glass plate storage device comprises a bar comprising a series of depressions in the surface thereby defining a series of uniform teeth between pairs of depressions, wherein the device for loading and/or unloading a glass plate storage device comprises a gear wheel comprising a rim of depressions thereby defining a series of uniform teeth between pairs of depressions, and wherein the method comprises the steps of moving the gear wheel towards the bar until the gear wheel engages the bar of the glass plate storage device such that the series of depressions and teeth of the gear wheel are in operative engagement with the depressions and teeth of the bar, and rotating the gear wheel such that the rotational motion applied to the gear wheel causes the bar to move relative to the gear wheel towards the device until the glass plate storage device is loaded over the device for loading and/or unloading a glass plate storage device.

Another aspect of the invention provides a method of unloading a glass plate storage device from a device for loading and/or unloading a glass plate storage device, wherein the glass plate storage device comprises a bar comprising a series of depressions in the surface thereby defining a series of uniform teeth between pairs of depressions, wherein the device for loading and/or unloading a glass plate storage device comprises a gear wheel comprising a rim of depressions thereby defining a series of uniform teeth between pairs of depressions, wherein the glass plate storage device is loaded on the device for loading and/or unloading a glass plate storage device and wherein the method comprises rotating the gear wheel such that the rotational motion applied to the gear wheel causes the bar to move relative to the gear wheel away from the device for loading and/or unloading a glass plate storage device until the glass plate storage device is unloaded from the device for loading and/or unloading a glass plate storage device.

### BRIEF DESCRIPTION OF THE DRAWINGS

These and other aspects of the invention are apparent from and will be elucidated with reference to the embodiments described hereinafter. In the drawings,
Fig. 1 is a diagram illustrating aspects of a gear wheel for a device for loading and/or unloading a glass plate storage device.
Fig. 2 is a diagram illustrating aspects of a bar for a glass plate storage device.
Fig. 3 is a diagram illustrating aspects of a device for loading and/or unloading a glass plate storage device comprising the gear wheel of Fig. 1.
Fig. 4A and Fig. 4B are diagrams illustrating aspects of a glass plate storage device comprising the bar of Fig. 2.
Fig. 5 is a diagram illustrating aspects of the device for loading and/or unloading a glass plate storage device of Fig. 3 and the glass plate storage device of Fig. 4A in a non-engaged position.
Fig. 6A is a diagram illustrating aspects of the device for loading and/or unloading a glass plate storage device of Fig. 3 and the glass plate storage device of Fig. 4A in an engaged position.
Fig. 6B is a diagram illustrating further aspects of the device for loading and/or unloading a glass plate storage device and the glass plate storage device in an engaged position shown in Fig. 6A.
Fig. 7A-7D are diagrams illustrating the loading process of a glass plate storage device.
Figs. 8A-8C are diagrams illustrating a system comprising a device for loading and/or unloading a glass plate storage device and two glass plate storage devices.
Fig. 9, 10 and 11 are diagrams illustrating further aspects of a loading system for a device for loading and/or unloading a glass plate storage device.
Fig. 12 illustrates further details of the security mechanism of the loading device shown in Fig. 11.
Figs. 13A-13D illustrates further details of a device for loading and/or unloading a glass plate storage device.

### DETAILED DESCRIPTION OF EMBODIMENTS

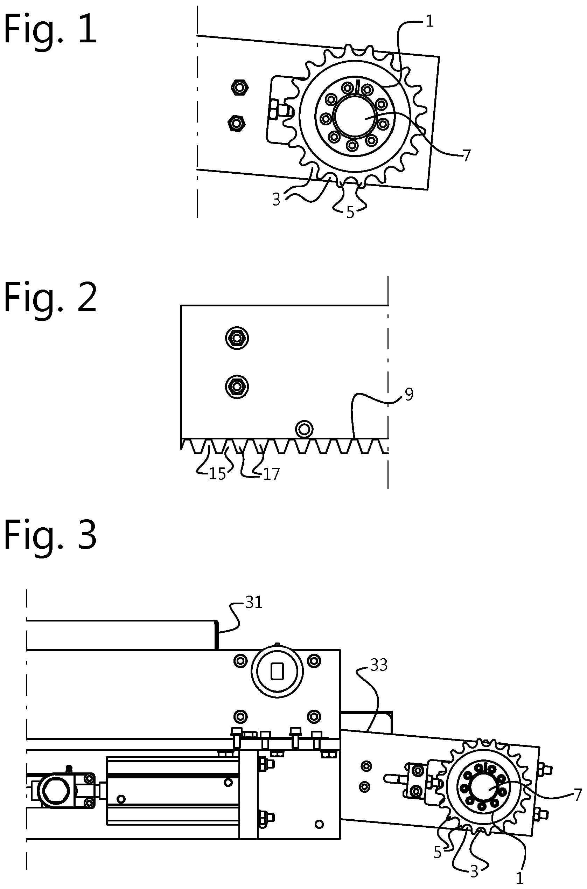

Fig. 1 is a diagram illustrating aspects of a gear wheel 1 for a device for loading and/or unloading a glass plate storage device.

The device for loading and/or unloading a glass plate storage device comprises a loading system which comprises a gear wheel 1 having a surface with a series of depressions 3. The series of depressions 3 in the surface defines a rim of teeth 5 wherein each tooth 5 is located between a pair of depressions 3. The teeth 5 are distributed uniformly over the surface of the gear wheel 1. I.e., the distance between two consecutive teeth 5 is substantially constant for all the teeth 5 in the gear wheel 1. The gear wheel 1 is further mounted on a shaft 7 such that, when the shaft 7 rotates, the gear wheel 1 rotates with the shaft 7. However, the gear wheel 1 may be mounted on the shaft in any other suitable way that allows the gear wheel 1 to rotate.

Fig. 2 is a diagram illustrating aspects of a bar 9 for a glass plate storage device.

The bar 9 comprises a series of depressions 15. The series of depressions 15 defines a series of uniform teeth 17 wherein each tooth 17 is located between a pair of depressions 15. The teeth 17 are distributed uniformly on the surface of the bar 9. I.e., the distance between two consecutive teeth 17 is substantially constant for all the teeth 17 in the bar 9.

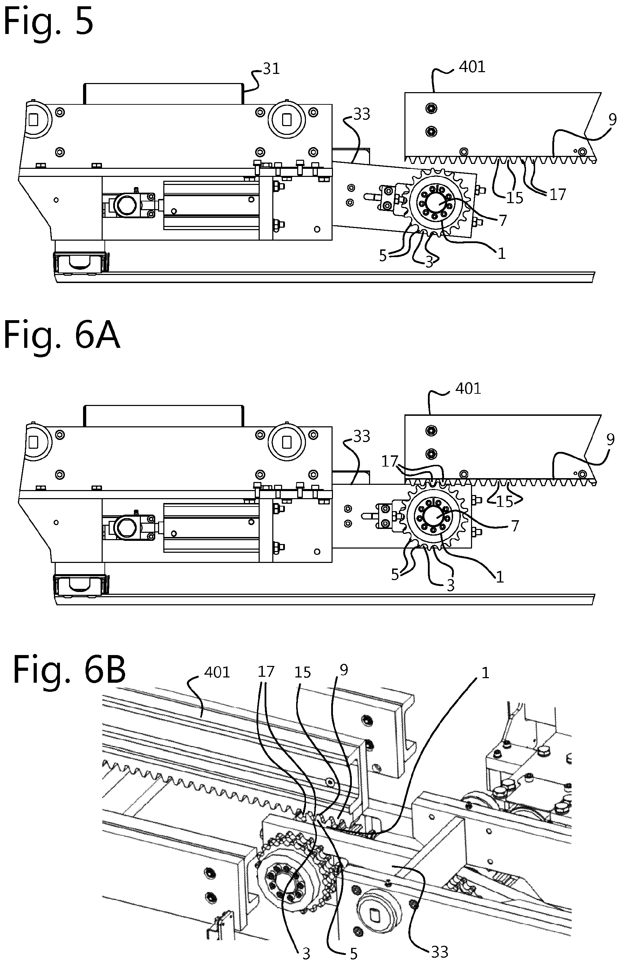

Fig. 3 is a diagram illustrating aspects of a device for loading and/or unloading a glass plate storage device comprising a loading system with the gear wheel of Fig. 1 wherein the same reference numbers as in Fig. 1 have been used for indicating the same elements. The device for loading and/or unloading a glass plate storage device 31 of Fig. 3 comprises the gear wheel 1 of Fig. 1 wherein the gear wheel 1 is mounted on a central support 33. The central support 33 is configured to bascule between a first low position and a second high position wherein in the second high position the gear wheel 1 is at the same level as the bar 9 such that the gear wheel 1 is able to engage the bar 9 and in the first low position the gear wheel 1 is at a lower level than the bar 9 such that the gear wheel 1 is able to disengage the bar 9 (cf. also Figures 5, 6A, 6B).

The gear wheel 1 and the bar 9 may be placed in any position that allows the gear wheel 1 and the bar 9 to engage and/or disengage and the loading system may be configured to move the central support 33 in any direction that allows the gear wheel 1 and the bar 9 to engage and/or disengage.

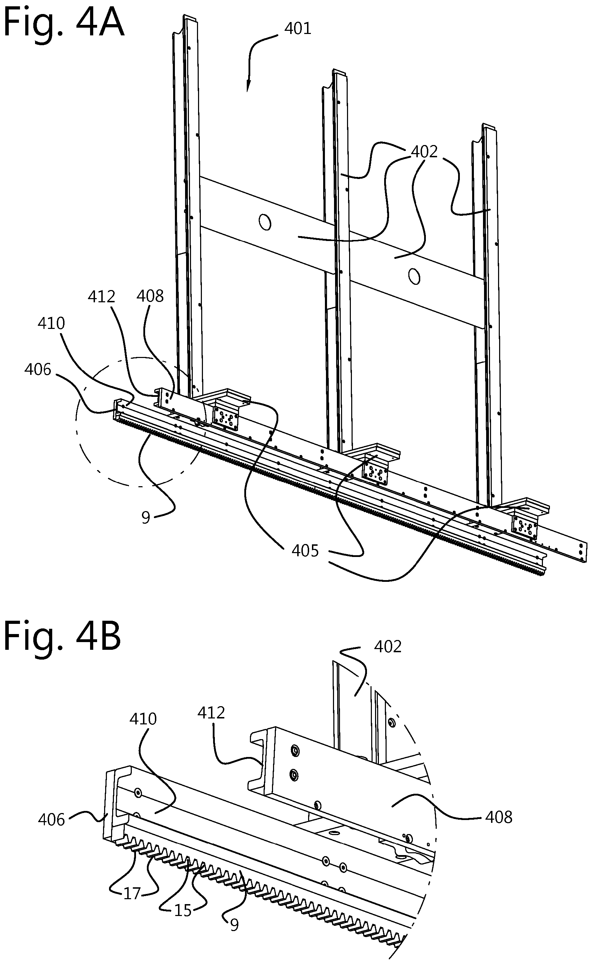

Fig. 4A and Fig. 4B are diagrams illustrating aspects of a glass plate storage device 401 comprising the bar of Fig. 2 wherein the same reference numbers as in Fig. 2 have been used for indicating the same elements. A glass plate comprises two opposite surfaces limited by several edges. Fig. 4A shows the glass plate storage device 401 which comprises a frame 402 and a platform 405 wherein the frame 402 and the platform 405 are configured to support a glass plate in a horizontal or vertical (or any other desired) position relative to the platform 405 such that one of the edges of the glass plate is supported by the platform 405 while one of the surfaces of the glass plate leans against the frame 402.

The plate glass storage device of Fig. 4A also comprises a first elongated support 406 and a second elongated support 408 wherein the first elongated support 406 is substantially parallel to the second elongated support 408 and the platform 405 is mounted over the first elongated support 406 and the second elongated support 408. The plate glass storage device of Fig. 4A comprises as well a first guide 410 and a second guide 412 wherein the first guide 410 is mounted on the first elongated support 406 and the second guide 412 is mounted on the second elongated support 408.

The glass plate storage device of Fig. 4A further comprises the bar 9 of Fig. 2 wherein the bar 9 is attached to the lower part of the first elongated support 406 of the glass plate storage device 401.

Fig. 4B shows an augmented view of the bar 9 of the glass plate storage device 401 of Fig. 4A.

Fig. 5 is a diagram illustrating aspects of the device for loading and/or unloading a glass plate storage device of Fig. 3 and the glass plate storage device 401 of Fig. 4A in a non-engaged position. Same reference numbers as in previous figures have been used for indicating similar features. In Fig. 5, the gear wheel 1 of the device for loading and/or unloading a glass plate storage device and the bar 9 of the glass plate storage device are not engaged and the central support 33 is at the first low position wherein in the first low position the gear wheel 1 is at a lower level than the bar 9 such that the gear wheel 1 and the bar 9 are not engaged. This first low position is an example of a disengaged position.

Fig 6A is a diagram illustrating aspects of the device for loading and/or unloading a glass plate storage device and the glass plate storage device of Fig. 5 in an engaged position which, in the present embodiment, corresponds to the second high position. Same reference numbers as in previous figures have been used for indicating similar features. In Fig. 6A, the gear wheel 1 of the device for loading and/or unloading a glass plate storage device and the bar 9 of the glass plate storage device 401 are engaged and the central support 33 is at the second high position wherein in the second high position the gear wheel 1 is at the same level as the bar 9 such that the gear wheel 1 is able to engage the bar 9 and that some of the teeth 5 of the gear wheel 1 are fitted inside some of the depressions 15 of the bar 9 and some of the teeth 17 of the bar 9 are fitted inside some of the depressions 3 of the gear wheel 1. Rotational motion of the gear wheel 1 in a counterclockwise direction causes the bar 9 to move relative to the gear wheel 1, thereby translating the rotational motion of the gear wheel 1 into a linear motion of the bar 9 in a direction towards the device for loading and/or unloading a glass plate storage device 401. In this way, a glass plate storage device is pulled towards the device for loading and/or unloading a glass plate storage device 401 and can be loaded on it. A glass plate storage device 401 that is loaded on the device for loading and/or unloading a glass plate storage device can also be unloaded by rotating the gear wheel 1 in a clockwise direction such that the rotational motion of the gear wheel 1 is translated into a linear motion of the bar 9 and the glass plate storage device 401 is pushed away from the device for loading and/or unloading a glass plate storage device.

Fig. 6B is a diagram illustrating further aspects of the device for loading and/or unloading a glass plate storage device and the glass plate storage device in an engaged position shown in Fig. 6A.

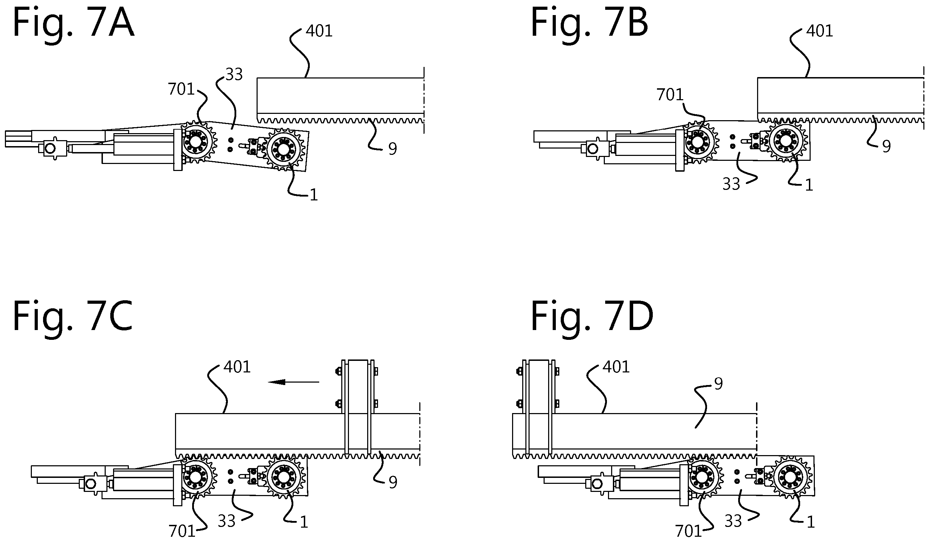

Figs. 7A-7D are diagrams illustrating the loading process of the glass plate storage device 401. Same reference numbers as in previous figures have been used for indicating similar features. The device for loading and/or unloading a glass plate storage device shown in Figs. 7A-7D is the same as the one shown in Fig. 3 wherein one of the parts of the device have been removed in order to show an auxiliary gear wheel 701. The glass plate storage device 401 shown in Figs. 7A-7D is the same as the one shown in Figs. 4A, 4B. The process for loading the glass plate storage device shown in Figs. 7A-7D works as follows.

In Fig. 7A, the devices are in a non-engaged position wherein the central support 33 is at a low position such that the gear wheel 1 is located at a lower level than the bar 9 and the gear wheel 1 and the bar 9 are not engaged.

In Fig. 7B, the devices are in the engaged position shown in Figs. 6A-6B wherein the central support 33 has been raised and it is at a high position such that the gear wheel 1 is located at the same level as the bar 9 and the gear wheel 1 and the bar 9 are engaged. In this position, the gear wheel 1 may, e.g., start rotating such that the rotational motion applied to the gear wheel 1 transforms in a linear movement of the bar 9 causing the bar 9 to move relative to the gear wheel 1, e.g., towards the device for loading and/or unloading a glass plate storage device.

In Fig. 7C, the glass plate storage device 401 is moving in the direction indicated by the arrow and the bar 9 has already reached the auxiliary gear wheel 701 such that the bar 9 and the auxiliary gear wheel 701 are also engaged and both the gear wheel 1 and the auxiliary gear wheel 701 rotate in the same direction and contribute to the movement of the glass plate storage device 401 towards the device for loading and/or unloading a glass plate storage device.

Finally, in Fig. 7D the glass plate storage device 401 has been completely loaded over the device for loading and/or unloading a glass plate storage device and, in this position, the bar 9 and the auxiliary gear wheel 701 are engaged but the bar 9 and the gear wheel 1 are not engaged because the bar 9 has now passed the position of the gear wheel 1.

Although not shown in Figs. 7A-7D, the central support 33 may be lowered after the glass plate storage device 401 has been completely loaded over the device for loading and/or unloading a glass plate storage device as shown in Fig. 7D such that the gear wheel 1 and the bar 9 are disengaged while the auxiliary gear wheel 701 and the bar 9 continue to be engaged.

The process in Figs. 7A-7D has been explained for a device for loading and/or unloading a glass plate storage device comprising a gear wheel 1 and an auxiliary gear wheel 701. However, the device for loading and/or unloading a glass plate storage device may comprise only the gear wheel 1 and not the auxiliary gear wheel 701. In this case, a similar loading process as explained in Figs. 7A-7D may be used for loading a glass plate storage device but only using the gear wheel 1 in order to move the glass plate storage device 401 towards the device for loading and/or unloading a glass plate storage device. I.e., the only rotational movement contributing to the linear movement of the bar 9 will be the one of the gear wheel 1.

A glass plate storage device that has been loaded over the device for loading and/or unloading a glass plate storage device according to the process explained in Figs. 7A-7D or according to any other loading process may be unloaded in the following way. First, the central support 33 will be raised to a high position wherein the gear wheel 1 is located at the same level as the bar 9. After that, the auxiliary gear wheel 701 will start rotating in a clock wise direction and the rotational motion of the auxiliary gear wheel 701 will transform in linear movement of the bar 9 relative to the auxiliary gear wheel 701 moving the glass plate storage device away from the device for loading and/or unloading the glass plate storage device 401. The auxiliary gear wheel 701 and the gear wheel 1 are connected via a chain (not shown) such that, when the auxiliary gear wheel 701 starts rotating in a clock wise direction, the gear wheel 1 also rotates in a clock wise direction synchronized with the auxiliary gear wheel 701. When the bar 9 reaches the gear wheel 1, the gear wheel 1 and the bar 9 engage such that both the rotational movement of the gear wheel 1 and the rotational movement of the auxiliary gear wheel 701 will contribute to the linear movement of the bar 9. When the bar 9 leaves the auxiliary gear wheel 701 behind such that the bar 9 and the auxiliary gear wheel 701 are disengaged, then only the rotational movement of the gear wheel 1 will contribute to the linear movement of the bar 9. Finally, the central support 33 will be lowered such that the bar 9 and the gear wheel 1 are disengaged.

Once again, a similar unloading process may apply to a device for loading and/or unloading a glass plate storage device may comprise only the gear wheel 1. In this case, the only rotational movement contributing to the linear movement of the bar 9 will be the one of the gear wheel 1.

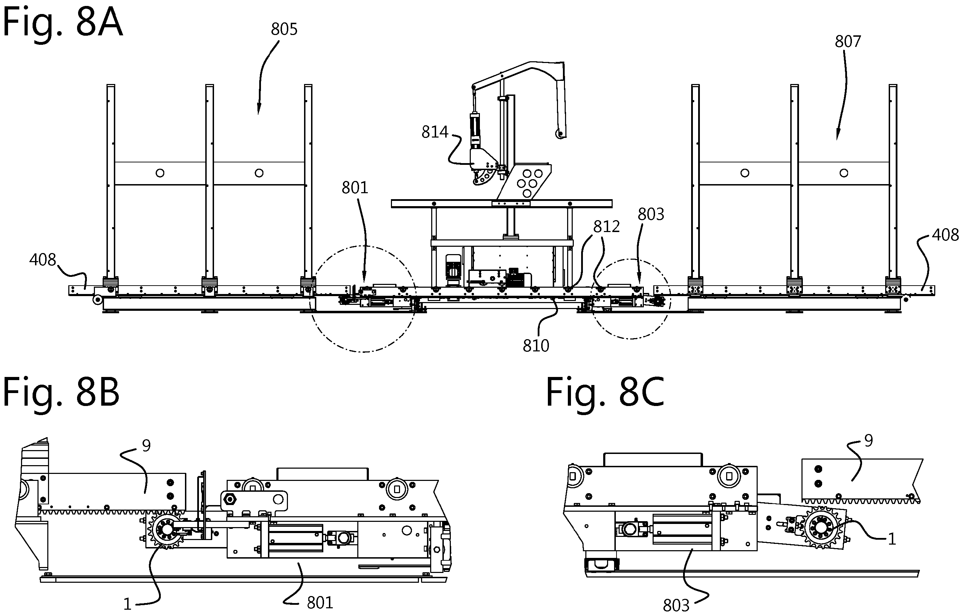

Figs. 8A-8C are diagrams illustrating a system comprising a device for loading and/or unloading a glass plate storage device and two glass plate storage devices 805, 807. As it can be seen in Fig. 8A, the device for loading and/or unloading a glass plate storage device may comprise a first loading system 801 and a second loading system 803 wherein the first loading system 801 and the second loading system 803 are located at opposite sides of the device for loading and/or unloading a glass plate storage device. The device for loading and/or unloading a glass plate storage device of Fig. 8A may comprise only the first loading system 801. In the same way, the device for loading and/or unloading a glass plate storage device of Fig. 8A may comprise only the second loading system 803. The first loading system 801 and the second loading system 803 are similar to the loading system explained in previous figures. The device for loading and/or unloading a glass plate storage device of Fig. 8A can load and/or unload a first glass plate storage device 805 and a second glass plate storage device 807 at the same time by using both loading systems. The first glass plate storage device 805 and the second glass plate storage device 807 are also similar to the glass plate storage device described in Fig. 4A-4B.

The device for loading and/or unloading a plate glass storage device of Fig. 8A comprises a base 810 for supporting a glass plate storage device once is loaded over the device, and also comprises a first series of rollers 812 configured to fit inside of the second guide 412 of the second elongated support 408 of a glass plate storage device. Although not shown, the device for loading and/or unloading a plate glass storage device of Fig. 8A further comprises a second series of rollers located parallel to and behind the first series of rollers 812 but orientated such that the first series of rollers 812 and the second series of rollers are facing opposite directions. The second series of rollers are configured to fit inside of the first guide 410. In this way, a glass plate storage device can be moved towards or away from the device guided by the second guide 412 sliding through the first series of rollers 812 and by the first guide 410 sliding through the second series of rollers.

The device for loading and/or unloading a plate glass storage device of Fig. 8A may comprise further an operating console such that an operator can use the operating console to configure an engine to drive the gear wheels 1, 701, and to configure another engine to move the central support 33 up and down. However, the device for loading and/or unloading a plate glass storage device of Fig. 8A may be operated and/or configured in any other suitable way.

The device for loading and/or unloading a plate glass storage device of Fig. 8A may also comprise a mechanism 814 configured to rotate and/or move up and down to hold the plate glass storage device into its place when it is loaded.

Fig. 8B shows further details of the first loading system 801 wherein the first loading system 801 and the first glass plate storage device 805 are engaged.

Fig. 8C shows further details of the second loading system 803 wherein the second loading system 803 and the second glass plate storage device 807 are not engaged.

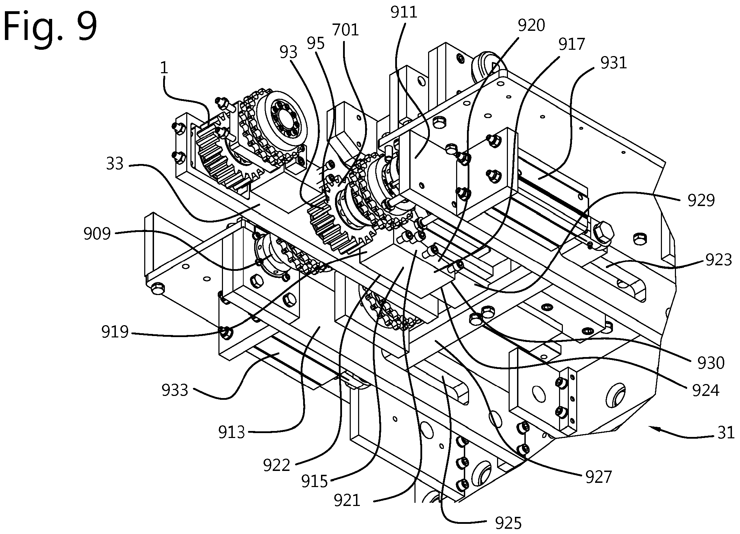

Fig. 9, 10 and 11 are diagrams illustrating further aspects of the device for loading and/or unloading the glass plate storage device of Fig. 3 wherein the same reference numbers as in Fig. 3 have been used for indicating the same elements. As it has been explained with reference to Fig. 3, the device for loading and/or unloading a glass plate storage device 31 comprises the gear wheel 1 wherein the gear wheel 1 is mounted in the central support 33 such that it can rotate. The device for loading and/or unloading a glass plate storage device 31 further comprises an auxiliary gear wheel 701 also mounted in the central support 33 at a certain distance from the gear wheel 1. The auxiliary gear wheel 701 also has a surface with a series of depressions 93. The series of depressions 93 in the surface of the auxiliary gear wheel 701 defines a rim of teeth 95 wherein each tooth 95 is located between a pair of depressions 93. The teeth 95 are distributed uniformly over the surface of the auxiliary gear wheel 701. I.e., the distance between two consecutive teeth 95 is substantially constant for all the teeth 95 in the auxiliary gear wheel 701. The device for loading and/or unloading a glass plate storage device 31 of Fig. 9 further comprises a shaft 909 wherein the auxiliary gear wheel 701 is mounted on the shaft 909 such that, when the shaft rotates, the auxiliary gear wheel 701 also rotates. The device for loading and/or unloading a glass plate storage device 31 of Fig. 9 further comprises a first lateral support 911 and a second lateral support 913 wherein the first lateral support 911 is located at one side of the central support 33 and the second lateral support 913 is located at the opposite side of the central support 33. The shaft 909 is mounted between the first lateral support 911 and the second lateral support 913 such that the shaft 909 extends from the first lateral support 911 to the second lateral support 913 and is able to rotate thereby causing also the auxiliary gear wheel 701 to rotate.

As has been explained with reference to Fig. 3, the device for loading and/or unloading a glass plate storage device 31 of Fig. 9 comprises as well a mechanism for raising and lowering the central support 33. The mechanism for raising and lowering the central support 33 comprises a first block 915 wherein the first block 915 is attached to the central support 33. The first block 915 comprises a first surface 917, a second surface 919, a third surface 920, a fourth surface 921, a fifth surface 922 and a sixth surface 924 wherein the first block 915 is attached to the central support 33 through the fifth surface 922 which has a trapezoidal shape, wherein the first surface 917 comprises a substantially rectangular shape and forms a substantially right-angle with the second surface 919 which also comprises a substantially rectangular shape, the fourth surface 921 also comprises a trapezoidal shape similar to the trapezoidal shape of the fifth surface 922 wherein the fourth surface 921 and the fifth surface 922 are substantially parallel to each other, the second surface 919 is facing the auxiliary gear wheel 901 while the sixth surface 924 is facing the opposite side.

The first lateral support 911 comprises an elongated opening 923 that extends longitudinally through the first lateral support 911. The second lateral support 913 also comprises an elongated opening 925 that extends longitudinally through the second lateral support 913.

The mechanism for raising and lowering the central support 33 further comprises an elongated element 927 mounted between the first lateral support 911 and the second lateral support 913 and extending substantially perpendicular to the first lateral support 911 and to the second lateral support 913 wherein the elongated element 927 traverses the first lateral support 911 through the elongated opening 923 and traverses the second lateral support 913 through the elongated opening 925 such that the elongated element 927 is configured to slide forwards and backwards guided by the elongated opening 923 and by the elongated opening 925. In this way, when the elongated element 927 slides forwards, the elongated element 927 moves towards the first block 915 and, when the elongated element 927 slides backwards moving away from the first block 915.

The mechanism for raising and lowering the central support 33 also comprises a second block 929 wherein the second block 929 is mounted on the elongated element 927 in a fixed way such that, when the elongated element 927 slides forwards or backwards guided by the elongated opening 923 and the elongated opening 925, the second block 929 also moves forwards or backwards. The second block 929 comprises a surface 930 facing the third surface 920 of the first block 915 such that, when the elongated element 927 moves towards the first block 915, the second block 929 also moves towards the first block 915 until it contacts the third surface 920 of the first block 915 thereby causing the central support 33 to bascule around the shaft 909 of the auxiliary gear wheel 901 such that the gear wheel 1 raises. And when the elongated element 927 moves away from the first block 915, the second block 929 also moves away the first block 915 thereby allowing the central support 33 to bascule around the shaft 909 of the auxiliary gear wheel 901 such that gravity causes the gear wheel 1 to descend.

The mechanism for raising and lowering the central support 33 also comprises a first engine 931 and a second engine 933 wherein the first engine 931 and the second engine 933 are configured to move the elongated element 927 forwards or backwards in order to raise the central support 33 or to allow that the central support 33 descends. The first engine 931 and the second engine 933 may comprise each one a cylinder chamber and a sliding piston wherein the pressure of a gas or liquid inside of the cylinder chamber causes the sliding piston to move thereby causing the elongated element 927 to also move.

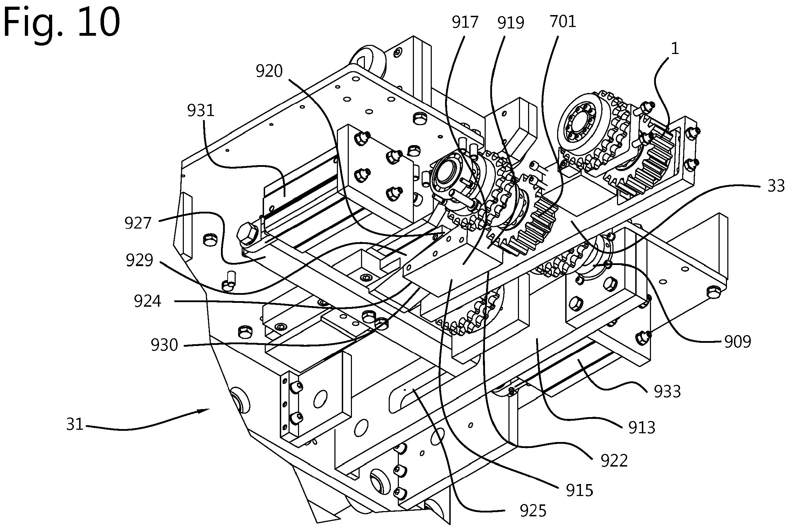

Fig. 10 corresponds to the device for loading and/or unloading a glass plate storage device 31 of Fig. 9 wherein the first auxiliary support 911 has been removed for allowing a better view of the mechanism for raising and lowering the central support 33.

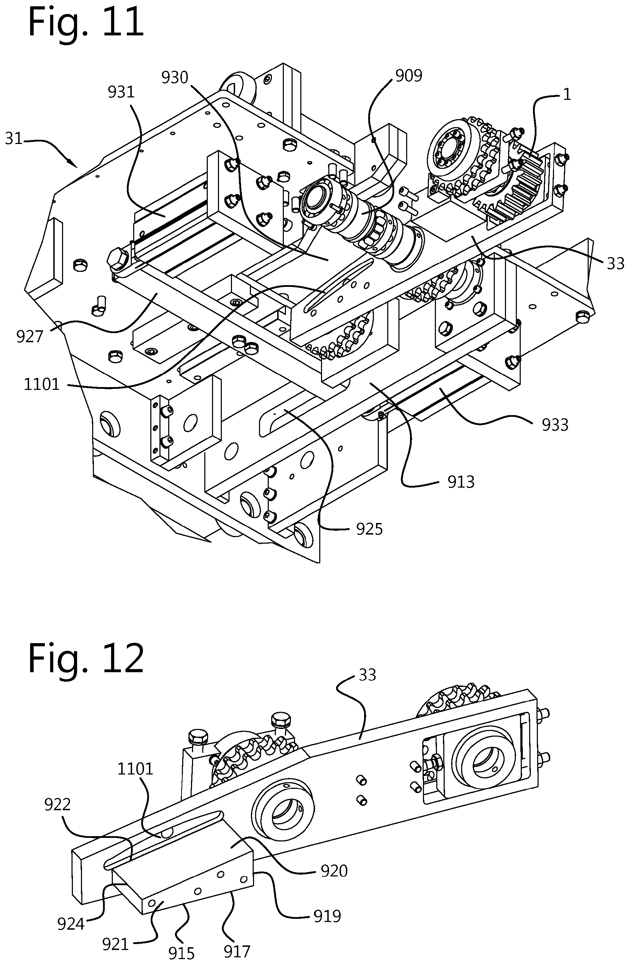

Fig. 11 corresponds to the device for loading and/or unloading a glass plate storage device 31 of Figs. 9 and 10 wherein the first block 915, the second block 929 and the auxiliary gear wheel 901 have been further removed for showing further details of the mechanism for raising and lowering the central support 33.

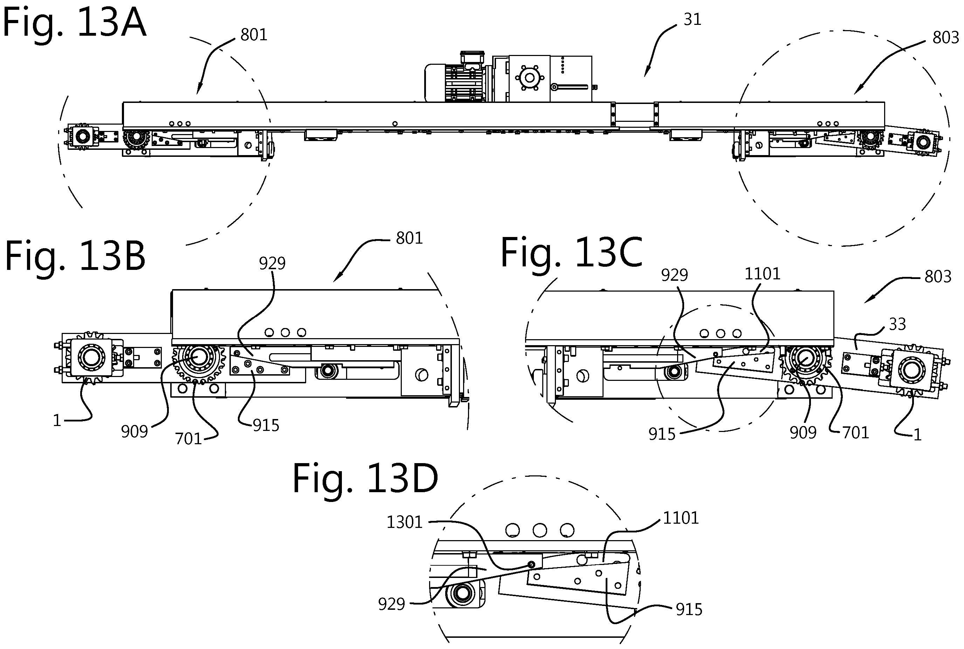

The device for loading and/or unloading a glass plate storage device 31 as shown in Fig. 11 further comprises a security mechanism wherein the security mechanism comprises a protuberance 1301 (not shown here, but in Fig. 13D) and a groove 1101. The protuberance 1301 is located on the second block 929 extending outwardly towards the central support 33. The groove 1101 is located on the central support 33 extending in a longitudinal direction above the third surface 920 of the first block 915.

Fig. 12 shows the central support 33 of the device for loading and/or unloading a glass plate storage device of Fig's. 10 and 11 wherein the groove 1101 is shown.

Figs. 13A-13D illustrates further details of the security mechanism shown in Fig. 11. Same reference numbers as in previous figures have been used for indicating the same elements, Fig. 13A shows a device 31 or loading and/or unloading a glass plate storage device comprising the first loading system 801 and the second loading system 803 wherein the first and second loading system 801 comprise the security mechanism explained with reference to Figs. 11 and 12. Fig. 13B shows a view of the first loading system 801. Fig. 13C shows a view of the second loading system 803. Fig. 13D shows the groove 1101 and the protuberance 1301 wherein the protuberance 1301 is located on the second block 929. When the mechanism for raising and lowering the central support 33 moves the second block 929 away from the first block 915 , the protuberance 1301 slides inside of the groove 1101 such that the central support 33 is compelled to bascule around the shaft 909 for lowering the gear wheel 1. In this way, the security mechanism ensures that the central support 33 lowers for disengagement of the gear wheel 1 and the bar 9.

Although the figures are only showing a device for loading and/or unloading a glass plate storage device comprising a gear wheel 1 and an auxiliary gear wheel 701, the device for loading and/or unloading a glass plate storage device may comprise only the gear wheel 1 and, what have been explained with regard to the device for loading and/or unloading a glass plate storage device comprising a gear wheel 1 and an auxiliary gear wheel 701, would still apply but in this case the gear wheel 1 will perform all the loading or unloading work. Other devices for loading and/or unloading a glass plate storage device comprising any other number of gear wheels would be possible and, in those cases, these gear wheels may be located in any suitable position that allows to load or unload a glass plate storage device.

Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A device for loading and/or unloading a glass plate storage device, wherein the device (31) comprises a loading system comprising a gear wheel (1) with a series of depressions (3) in an outer surface of the gear wheel (1) thereby defining a rim of teeth (5) between pairs of depressions (3), wherein the gear wheel (1) is configured to engage the glass plate storage device and to perform at least one of rotating in a first direction thereby moving the glass plate storage device (401; 805, 807) towards the device (31) for loading the glass plate storage device (401; 805, 807) over the device (31) and rotating in a second direction thereby moving the glass plate storage device (401; 805, 807) away from the device (31) and to disengage the glass plate storage device (401; 805, 807) for unloading the glass plate storage device (401; 805, 807) from the device (31) and wherein the first direction and the second direction are opposite directions.

2. The device for loading and/or unloading glass plate storage device according to claim 1, wherein the device (31) further comprises supporting means for supporting the glass plate storage device (401; 805, 807) and wherein the gear wheel (1) is configured to perform at least one of rotating in the first direction until the glass plate storage device is loaded over the supporting means and rotating in the second direction until the glass plate storage device is unloaded from the supporting means.

3. The device for loading and/or unloading a glass plate storage device according to any of the preceding claims, wherein the teeth (5) of the gear wheel (1) are uniformly distributed.

4. The device for loading and/or unloading a glass plate storage device according to any of the preceding claims, wherein the gear wheel (1) is mounted on a shaft (7), wherein the shaft (7) is configured to rotate and the gear wheel (1) is configured such that, when the shaft (7) rotates, the gear wheel (1) rotates with the shaft (7).

5. The device for loading and/or unloading a glass plate storage device according to claim 4, wherein the device further comprises a central support (33), the gear wheel (1) is mounted on said shaft (7), and the shaft (7) is mounted on the central support (33).

6. The device for loading and/or unloading a glass plate storage device according to claim 5, wherein the central support (33) extends outwardly from the device and the shaft (7) is mounted extending outwardly from a side of the central support and substantially perpendicular to the central support (33).

7. The device for loading and/or unloading a glass plate storage device according to any of the preceding claims, wherein the loading system further comprises moving means configured to perform at least one of moving the gear wheel (1) towards the glass plate storage device (401; 805, 807) such that the gear wheel (1) engages the glass plate storage device (401; 805, 807), and moving the gear wheel (1) away from the glass plate storage device (401; 805, 807) such that the gear wheel (1) disengages the glass plate storage device.

8. The device for loading and/or unloading a glass plate storage device according to any of the preceding claims, wherein the loading system further comprises an auxiliary gear wheel (701) with a series of depressions (93) in an outer surface of the auxiliary gear wheel (701) thereby defining a rim of teeth (95) between pairs of depressions (93), wherein the auxiliary gear wheel (701;91) is configured to engage the glass plate storage device (401; 805, 807) and to perform at least one of rotating in the first direction thereby moving the glass plate storage device (401; 805, 807) towards the device for loading the glass plate storage device (401; 805, 807) over the device and rotating in the second direction thereby moving the glass plate storage device (401; 805, 807) away from the device for loading and/or unloading a glass plate storage device in order to unload the glass plate storage device (401; 805, 807) from the device for loading and/or unloading a glass plate storage device.

9. A glass plate storage device for storing a glass plate, wherein the glass plate storage device (401; 805, 807) comprises a bar (9) comprising a series of depressions (15) thereby defining a series of teeth (17) between pairs of depressions, wherein the bar is arranged to engage with a wheel gear of a device such that movement of the wheel gear causes the glass plate storage device to move toward the device and to load over the device and the bar is arranged to disengage from the wheel gear of the device to unload the glass plate storage device from the device.

10. The glass plate storage device according to claim 9, wherein the depressions (15) of the bar (9) are uniformly distributed.

11. The glass plate storage device according to claims 9-10, wherein the glass plate storage device (401; 805, 807) further comprises a supporting frame and means for supporting a glass plate against the frame.

12. A system comprising the device for loading and/or unloading a glass plate storage device according to claims 1-8 and the glass plate storage device according to claims 9-12, wherein the gear wheel (1) is configured to engage the bar (9) of the glass plate storage device such that the series of depressions (3) and teeth (5) of the gear wheel (1) are in operative engagement with the depressions (15) and teeth (17) of the bar (9) and are configured for at least one of rotating in the first direction causing movement of the bar (9) relative to the gear wheel (1) towards the device for loading and/or unloading a glass plate storage device thereby also moving the glass plate storage device (401; 805, 807) towards the device for loading and/or unloading a glass plate storage device and rotating in the second direction causing movement of the bar (9) relative to the gear wheel (1) away from the device for loading and/or unloading a glass plate storage device thereby also moving the glass plate storage device (401; 805, 807) away from the device for loading and/or unloading a glass plate storage device and to disengage the bar (9) of the glass plate storage device such that the series of depressions (3) and teeth (5) of the gear wheel (1) are not in operative engagement with the depressions (15) and teeth (17) of the bar (9).

13. A method of loading a glass plate storage device over a device for loading and/or unloading a glass plate storage device, wherein the glass plate storage device comprises a bar comprising a series of depressions in the surface thereby defining a series of uniform teeth between pairs of depressions, wherein the device for loading and/or unloading a glass plate storage device comprises a gear wheel comprising a rim of depressions thereby defining a series of uniform teeth between pairs of depressions, and wherein the method comprises the steps of:
moving the gear wheel towards the bar until the gear wheel engages the bar of the glass plate storage device such that the series of depressions and teeth of the gear wheel are in operative engagement with the depressions and teeth of the bar; and rotating the gear wheel such that the rotational motion applied to the gear wheel causes the bar to move relative to the gear wheel towards the device for loading and/or unloading a glass plate storage device until the glass plate storage device is loaded over the device for loading and/or unloading a glass plate storage device.

14. A method of unloading a glass plate storage device from a device for loading and/or unloading a glass plate storage device, wherein the glass plate storage device comprises a bar comprising a series of depressions in the surface thereby defining a series of uniform teeth between pairs of depressions, wherein the device for loading and/or unloading a glass plate storage device comprises a gear wheel comprising a rim of depressions thereby defining a series of uniform teeth between pairs of depressions, wherein the method comprises, when the glass plate storage device is loaded on the device for loading and/or unloading a glass plate storage device, rotating the gear wheel such that the rotational motion applied to the gear wheel causes the bar to move relative to the gear wheel away from the device for loading and/or unloading a glass plate storage device until the glass plate storage device is unloaded from the device for loading and/or unloading a glass plate storage device.

## Patentansprüche

1. Eine Vorrichtung zum Laden und/oder Entladen einer Glasplattenaufbewahrungsvorrichtung, wobei die Vorrichtung (31) ein Ladesystem umfasst, das ein Zahnrad (1) mit einer Reihe an Vertiefungen (3) an einer Außenfläche des Zahnrads (1) umfasst, wodurch ein Kranz aus Zähnen (5) zwischen Paaren an Vertiefungen (3) definiert wird, wobei das Zahnrad (1) konfiguriert ist, mit der Glasplattenaufbewahrungsvorrichtung zu verzahnen und mindestens Eines von Rotieren in eine erste Richtung und dadurch Bewegen der Glasplattenaufbewahrungsvorrichtung (401; 805, 807) in Richtung der Vorrichtung (31) zum Laden der Glasplattenaufbewahrungsvorrichtung (401; 805, 807) über die Vorrichtung (31) und Rotieren in eine zweite Richtung und dadurch Bewegen der Glasplattenaufbewahrungsvorrichtung (401; 805, 807) von der Vorrichtung (31) weg auszuführen und sich zum Entladen der Glasplattenaufbewahrungsvorrichtung (401; 805, 807) aus der Vorrichtung (31) von der Glasplattenaufbewahrungsvorrichtung (401; 805, 807) zu lösen und wobei die erste Richtung und die zweite Richtung entgegengesetzte Richtungen sind.

2. Die Vorrichtung zum Laden und/oder Entladen einer Glasplattenaufbewahrungsvorrichtung nach Anspruch 1, wobei die Vorrichtung (31) ferner Stützmittel zum Stützen der Glasplattenaufbewahrungsvorrichtung (401; 805, 807) umfasst und wobei das Zahnrad (1) konfiguriert ist, mindestens Eines von Rotieren in die erste Richtung, bis die Glasplattenaufbewahrungsvorrichtung über die Stützmittel geladen ist, und Rotieren in die zweite Richtung, bis die Glasplattenaufbewahrungsvorrichtung von den Stützmitteln entladen ist, auszuführen.

3. Die Vorrichtung zum Laden und/oder Entladen einer Glasplattenaufbewahrungsvorrichtung nach einem der vorhergehenden Ansprüche, wobei die Zähne (5) des Zahnrads (1) gleichmäßig verteilt sind.

4. Die Vorrichtung zum Laden und/oder Entladen einer Glasplattenaufbewahrungsvorrichtung nach einem der vorhergehenden Ansprüche, wobei das Zahnrad (1) an einer Welle (7) befestigt ist, wobei die Welle (7) konfiguriert ist, zu rotieren, und das Zahnrad (1) so konfiguriert ist, dass, wenn die Welle (7) rotiert, das Zahnrad (1) mit der Welle (7) rotiert.

5. Die Vorrichtung zum Laden und/oder Entladen einer Glasplattenaufbewahrungsvorrichtung nach Anspruch 4, wobei die Vorrichtung ferner eine zentrale Stütze (33) umfasst, das Zahnrad (1) an besagter Welle (7) befestigt ist und die Welle (7) an der zentralen Stütze (33) befestigt ist.

6. Die Vorrichtung zum Laden und/oder Entladen einer Glasplattenaufbewahrungsvorrichtung nach Anspruch 5, wobei die zentrale Stütze (33) aus der Vorrichtung herausragt und die Welle (7) aus einer Seite der zentralen Stütze herausragend und im Wesentlichen senkrecht zu der zentralen Stütze (33) befestigt ist.

7. Die Vorrichtung zum Laden und/oder Entladen einer Glasplattenaufbewahrungsvorrichtung nach einem der vorhergehenden Ansprüche, wobei das Ladesystem ferner Bewegungsmittel umfasst, die konfiguriert sind, mindestens Eines von Bewegen des Zahnrads (1) in Richtung der Glasplattenaufbewahrungsvorrichtung (401; 805, 807), sodass das Zahnrad (1) mit der Glasplattenaufbewahrungsvorrichtung (401; 805, 807) verzahnt, und Bewegen des Zahnrads (1) von der Glasplattenaufbewahrungsvorrichtung (401; 805, 807) weg, sodass sich das Zahnrad (1) von der Glasplattenaufbewahrungsvorrichtung löst, auszuführen.

8. Die Vorrichtung zum Laden und/oder Entladen einer Glasplattenaufbewahrungsvorrichtung nach einem der vorhergehenden Ansprüche, wobei das Ladesystem ferner ein Hilfszahnrad (701) mit einer Reihe an Vertiefungen (93) an einer Außenfläche des Hilfszahnrads (701) umfasst, wodurch ein Kranz aus Zähnen (95) zwischen Paaren an Vertiefungen (93) definiert wird, wobei das Hilfszahnrad (701; 91) konfiguriert ist, mit der Glasplattenaufbewahrungsvorrichtung (401; 805, 807) zu verzahnen und mindestens Eines von Rotieren in die erste Richtung und dadurch Bewegen der Glasplattenaufbewahrungsvorrichtung (401; 805, 807) in Richtung der Vorrichtung zum Laden der Glasplattenaufbewahrungsvorrichtung (401; 805, 807) über die Vorrichtung und Rotieren in die zweite Richtung und dadurch Bewegen der Glasplattenaufbewahrungsvorrichtung (401; 805, 807) von der Vorrichtung zum Laden und/oder Entladen einer Glasplattenaufbewahrungsvorrichtung weg, um die Glasplattenaufbewahrungsvorrichtung (401; 805, 807) von der Vorrichtung zum Laden und/oder Entladen einer Glasplattenaufbewahrungsvorrichtung zu entladen, auszuführen.

9. Eine Glasplattenaufbewahrungsvorrichtung zum Aufbewahren einer Glasplatte, wobei die Glasplattenaufbewahrungsvorrichtung (401; 805, 807) ein längliches Element (9) umfasst, das eine Reihe an Vertiefungen umfasst (15), wodurch eine Reihe an Zähnen (17) zwischen Paaren an Vertiefungen definiert wird, wobei das längliche Element hergerichtet ist, mit einem Zahnrad einer Vorrichtung so zu verzahnen, dass eine Bewegung des Zahnrads eine Bewegung der Glasplattenaufbewahrungsvorrichtung in Richtung der Vorrichtung und ein Laden über die Vorrichtung verursacht und wobei das längliche Element hergerichtet ist, sich von dem Zahnrad der Vorrichtung zum Entladen der Glasplattenaufbewahrungsvorrichtung von der Vorrichtung zu lösen.

10. Die Glasplattenaufbewahrungsvorrichtung nach Anspruch 9, wobei die Vertiefungen (15) des länglichen Elements (9) gleichmäßig verteilt sind.

11. Die Glasplattenaufbewahrungsvorrichtung nach den Ansprüchen 9 bis 10, wobei die Glasplattenaufbewahrungsvorrichtung (401; 805, 807) ferner einen Stützrahmen und Mittel zum Stützen einer Glasplatte gegen den Rahmen umfasst.

12. Ein System, das die Vorrichtung zum Laden und/oder Entladen einer Glasplattenaufbewahrungsvorrichtung nach den Ansprüchen 1 bis 8 und die Glasplattenaufbewahrungsvorrichtung nach den Ansprüchen 9 bis 12 umfasst, wobei das Zahnrad (1) konfiguriert ist, mit dem länglichen Element (9) der Glasplattenaufbewahrungsvorrichtung zu verzahnen, sodass die Reihe an Vertiefungen (3) und Zähne (5) des Zahnrads (1) operativ mit den Vertiefungen (15) und Zähnen (17) des länglichen Elements (9) verzahnt sind und für mindestens Eines von Rotieren in die erste Richtung, was eine Bewegung des länglichen Elements (9) relativ zu dem Zahnrad (1) in Richtung der Vorrichtung zum Laden und/oder Entladen einer Glasplattenaufbewahrungsvorrichtung verursacht, und dadurch auch Bewegen der Glasplattenaufbewahrungsvorrichtung (401; 805, 807) in Richtung der Vorrichtung zum Laden und/oder Entladen einer Glasplattenaufbewahrungsvorrichtung, und Rotieren in die zweite Richtung, was eine Bewegung des länglichen Elements (9) relativ zu dem Zahnrad (1) weg von der Vorrichtung zum Laden und/oder Entladen einer Glasplattenaufbewahrungsvorrichtung verursacht, und dadurch auch Bewegen der Glasplattenaufbewahrungsvorrichtung (401; 805, 807) von der Vorrichtung zum Laden und/oder Entladen einer Glasplattenaufbewahrungsvorrichtung weg, konfiguriert sind, und sich von dem länglichen Element (9) der Glasplattenaufbewahrungsvorrichtung zu lösen, sodass die Reihe an Vertiefungen (3) und Zähne (5) des Zahnrads (1) nicht operativ verzahnt sind mit den Vertiefungen (15) und Zähnen (17) des länglichen Elements (9).

13. Ein Verfahren zum Laden einer Glasplattenaufbewahrungsvorrichtung über eine Vorrichtung zum Laden und/oder Entladen einer Glasplattenaufbewahrungsvorrichtung, wobei die Glasplattenaufbewahrungsvorrichtung ein längliches Element umfasst, das eine Reihe an Vertiefungen in der Oberfläche umfasst, wodurch eine Reihe gleichmäßiger Zähne zwischen Paaren an Vertiefungen definiert wird, wobei die Vorrichtung zum Laden und/oder Entladen einer Glasplattenaufbewahrungsvorrichtung ein Zahnrad umfasst, das einen Kranz aus Vertiefungen umfasst, wodurch eine Reihe gleichmäßiger Zähne zwischen Paaren an Vertiefungen definiert wird, und wobei das Verfahren folgende Schritte umfasst:
Bewegen des Zahnrads in Richtung des länglichen Elements, bis das Zahnrad mit dem länglichen Element der Glasplattenaufbewahrungsvorrichtung verzahnt, sodass die Reihe an Vertiefungen und Zähne des Zahnrads operativ mit den Vertiefungen und Zähnen des länglichen Elements verzahnt sind; und Rotieren des Zahnrads, sodass die auf das Zahnrad angewandte Rotationsbewegung das längliche Element veranlasst, sich relativ zu dem Zahnrad in Richtung der Vorrichtung zum Laden und/oder Entladen einer Glasplattenaufbewahrungsvorrichtung zu bewegen, bis die Glasplattenaufbewahrungsvorrichtung über die Vorrichtung zum Laden und/oder Entladen einer Glasplattenaufbewahrungsvorrichtung geladen ist.

14. Ein Verfahren zum Entladen einer Glasplattenaufbewahrungsvorrichtung von einer Vorrichtung zum Laden und/oder Entladen einer Glasplattenaufbewahrungsvorrichtung, wobei die Glasplattenaufbewahrungsvorrichtung ein längliches Element umfasst, das eine Reihe an Vertiefungen in der Oberfläche umfasst, wodurch eine Reihe gleichmäßiger Zähne zwischen Paaren an Vertiefungen definiert wird, wobei die Vorrichtung zum Laden und/oder Entladen einer Glasplattenaufbewahrungsvorrichtung ein Zahnrad umfasst, das einen Kranz aus Vertiefungen umfasst, wodurch eine Reihe gleichmäßiger Zähne zwischen Paaren an Vertiefungen definiert wird, wobei das Verfahren umfasst: wenn die Glasplattenaufbewahrungsvorrichtung auf die Vorrichtung zum Laden und/oder Entladen einer Glasplattenaufbewahrungsvorrichtung geladen ist, Rotieren des Zahnrads, sodass die auf das Zahnrad angewandte Rotationsbewegung das längliche Element veranlasst, sich relativ zu dem Zahnrad weg von der Vorrichtung zum Laden und/oder Entladen einer Glasplattenaufbewahrungsvorrichtung zu bewegen, bis die Glasplattenaufbewahrungsvorrichtung von der Vorrichtung zum Laden und/oder Entladen einer Glasplattenaufbewahrungsvorrichtung entladen ist.

## Revendications

1. - Dispositif de chargement et/ou de déchargement d'un dispositif de stockage de plaque de verre, le dispositif (31) comprenant un système de chargement comprenant une roue dentée (1) avec une série de creux (3) dans une surface extérieure de la roue dentée (1), définissant ainsi un rebord de dents (5) entre des paires de creux (3), la roue dentée (1) étant configurée pour s'engager avec le dispositif de stockage de plaque de verre et pour effectuer au moins l'une parmi une rotation dans une première direction, déplaçant ainsi le dispositif de stockage de plaque de verre (401 ; 805, 807) vers le dispositif (31) pour charger le dispositif de stockage de plaque de verre (401 ; 805, 807) sur le dispositif (31), et une rotation dans une seconde direction, déplaçant ainsi le dispositif de stockage de plaque de verre (401 ; 805, 807) à l'opposé du dispositif (31), et pour désengager le dispositif de stockage de plaque de verre (401 ; 805, 807) pour décharger le dispositif de stockage de plaque de verre (401 ; 805, 807) du dispositif (31), et la première direction et la seconde direction étant des directions opposées.

2. - Dispositif de chargement et/ou de déchargement d'un dispositif de stockage de plaque de verre selon la revendication 1, le dispositif (31) comprenant en outre des moyens de support pour supporter le dispositif de stockage de plaque de verre (401 ; 805, 807) et la roue dentée (1) étant configurée pour effectuer au moins l'une parmi une rotation dans la première direction jusqu'à ce que le dispositif de stockage de plaque de verre soit chargé sur les moyens de support et une rotation dans la seconde direction jusqu'à ce que le dispositif de stockage de plaque de verre soit déchargé des moyens de support.

3. - Dispositif de chargement et/ou de déchargement d'un dispositif de stockage de plaque de verre selon l'une quelconque des revendications précédentes, dans lequel les dents (5) de la roue dentée (1) sont réparties de manière uniforme.

4. - Dispositif de chargement et/ou de déchargement d'un dispositif de stockage de plaque de verre selon l'une quelconque des revendications précédentes, dans lequel la roue dentée (1) est montée sur un arbre (7), l'arbre (7) étant configuré pour tourner et la roue dentée (1) étant configurée de telle sorte que, lorsque l'arbre (7) tourne, la roue dentée (1) tourne avec l'arbre (7).

5. - Dispositif de chargement et/ou de déchargement d'un dispositif de stockage de plaque de verre selon la revendication 4, le dispositif comprenant en outre un support central (33), la roue dentée (1) étant montée sur ledit arbre (7), et l'arbre (7) étant monté sur le support central (33).

6. - Dispositif de chargement et/ou de déchargement d'un dispositif de stockage de plaque de verre selon la revendication 5, dans lequel le support central (33) s'étend vers l'extérieur à partir du dispositif et l'arbre (7) est monté en s'étendant vers l'extérieur à partir d'un côté du support central et sensiblement perpendiculairement au support central (33).

7. - Dispositif de chargement et/ou de déchargement d'un dispositif de stockage de plaque de verre selon l'une quelconque des revendications précédentes, le système de chargement comprenant en outre des moyens de déplacement configurés pour effectuer au moins l'un parmi un déplacement de la roue dentée (1) vers le dispositif de stockage de plaque de verre (401 ; 805, 807) de telle sorte que la roue dentée (1) s'engage avec le dispositif de stockage de plaque de verre (401 ; 805, 807), et un déplacement de la roue dentée (1) à l'opposé du dispositif de stockage de plaque de verre (401 ; 805, 807) de telle sorte que la roue dentée (1) se désengage du dispositif de stockage de plaque de verre.

8. - Dispositif de chargement et/ou de déchargement d'un dispositif de stockage de plaque de verre selon l'une quelconque des revendications précédentes, le système de chargement comprenant en outre une roue dentée auxiliaire (701) avec une série de creux (93) dans une surface extérieure de la roue dentée auxiliaire (701) définissant ainsi un rebord de dents (95) entre des paires de creux (93), la roue dentée auxiliaire (701 ; 91) étant configurée pour s'engager avec le dispositif de stockage de plaque de verre (401 ; 805, 807) et pour effectuer au moins l'une parmi une rotation dans la première direction, déplaçant ainsi le dispositif de stockage de plaque de verre (401 ; 805, 807) vers le dispositif de chargement du dispositif de stockage de plaque de verre (401 ; 805, 807) sur le dispositif, et une rotation dans la seconde direction, déplaçant ainsi le dispositif de stockage de plaque de verre (401 ; 805, 807) à l'opposé du dispositif de chargement et/ou de déchargement d'un dispositif de stockage de plaque de verre afin de décharger le dispositif de stockage de plaque de verre (401 ; 805, 807) du dispositif de chargement et/ou de déchargement d'un dispositif de stockage de plaque de verre.

9. - Dispositif de stockage de plaque de verre pour stocker une plaque de verre, le dispositif de stockage de plaque de verre (401 ; 805, 807) comprenant une barre (9) comportant une série de creux (15) définissant ainsi une série de dents (17) entre des paires de creux, la barre étant agencée pour s'engager avec une roue dentée d'un dispositif de telle sorte qu'un mouvement de la roue dentée amène le dispositif de stockage de plaque de verre à se déplacer vers le dispositif et être chargé sur le dispositif et la barre est agencée pour se désengager de la roue dentée du dispositif pour décharger le dispositif de stockage de plaque de verre du dispositif.

10. - Dispositif de stockage de plaque de verre selon la revendication 9, dans lequel les creux (15) de la barre (9) sont répartis de manière uniforme.

11. - Dispositif de stockage de plaque de verre selon les revendications 9 et 10, le dispositif de stockage de plaque de verre (401 ; 805, 807) comprenant en outre un cadre de support et des moyens pour supporter une plaque de verre contre le cadre.

12. - Système comprenant le dispositif de chargement et/ou de déchargement d'un dispositif de stockage de plaque de verre selon les revendications 1 à 8 et le dispositif de stockage de plaque de verre selon les revendications 9 à 12, dans lequel la roue dentée (1) est configurée pour s'engager avec la barre (9) du dispositif de stockage de plaque de verre de telle sorte que les séries de creux (3) et de dents (5) de la roue dentée (1) sont engagées de manière fonctionnelle avec les creux (15) et les dents (17) de la barre (9) et sont configurées pour au moins l'une parmi une rotation dans la première direction, entraînant un mouvement de la barre (9) par rapport à la roue dentée (1) vers le dispositif de chargement et/ou de déchargement d'un dispositif de stockage de plaque de verre, déplaçant ainsi également le dispositif de stockage de plaque de verre (401 ; 805, 807) vers le dispositif de chargement et/ou de déchargement d'un dispositif de stockage de plaque de verre, et une rotation dans la seconde direction, entraînant un mouvement de la barre (9) par rapport à la roue dentée (1) à l'opposé du dispositif de chargement et/ou de déchargement d'un dispositif de stockage de plaque de verre, déplaçant ainsi également le dispositif de stockage de plaque de verre (401 ; 805, 807) à l'opposé du dispositif de chargement et/ou de déchargement d'un dispositif de stockage de plaque de verre, et pour désengager la barre (9) du dispositif de stockage de plaque de verre de telle sorte que les séries de creux (3) et de dents (5) de la roue dentée (1) ne sont pas engagées de manière fonctionnelle avec les creux (15) et les dents (17) de la barre (9).

13. - Procédé de chargement d'un dispositif de stockage de plaque de verre sur un dispositif de chargement et/ou de déchargement d'un dispositif de stockage de plaque de verre, dans lequel le dispositif de stockage de plaque de verre comprend une barre comprenant une série de creux dans la surface définissant ainsi une série de dents uniformes entre des paires de creux, dans lequel le dispositif de chargement et/ou de déchargement d'un dispositif de stockage de plaque de verre comprend une roue dentée comprenant un rebord de creux définissant ainsi une série de dents uniformes entre des paires de creux, et le procédé comprenant les étapes :
déplacer la roue dentée vers la barre jusqu'à ce que la roue dentée s'engage avec la barre du dispositif de stockage de plaque de verre de telle sorte que les séries de creux et de dents de la roue dentée sont engagées de manière fonctionnelle avec les creux et les dents de la barre ; et faire tourner la roue dentée de telle sorte que le mouvement de rotation appliqué à la roue dentée amène la barre à se déplacer par rapport à la roue dentée vers le dispositif de chargement et/ou de déchargement d'un dispositif de stockage de plaque de verre jusqu'à ce que le dispositif de stockage de plaque de verre soit chargé sur le dispositif de chargement et/ou de déchargement d'un dispositif de stockage de plaque de verre.

14. - Procédé de déchargement d'un dispositif de stockage de plaque de verre à partir d'un dispositif de chargement et/ou de déchargement d'un dispositif de stockage de plaque de verre, dans lequel le dispositif de stockage de plaque de verre comprend une barre comprenant une série de creux dans la surface définissant ainsi une série de dents uniformes entre des paires de creux, dans lequel le dispositif de chargement et/ou de déchargement d'un dispositif de stockage de plaque de verre comprend une roue dentée comprenant un rebord de creux définissant ainsi une série de dents uniformes entre des paires de creux, le procédé comprenant, lorsque le dispositif de stockage de plaque de verre est chargé sur le dispositif de chargement et/ou de déchargement d'un dispositif de stockage de plaque de verre, faire tourner la roue dentée de telle sorte que le mouvement de rotation appliqué à la roue dentée amène la barre à se déplacer par rapport à la roue dentée à l'opposé du dispositif de chargement et/ou de déchargement d'un dispositif de stockage de plaque de verre jusqu'à ce que le dispositif de stockage de plaque de verre soit déchargé du dispositif de chargement et/ou de déchargement d'un dispositif de stockage de plaque de verre.
